(19) Europäisches Patentamt

European Patent Office

Office européen des brevets

(11) EP 1 366 887 A1

(12) EUROPEAN PATENT APPLICATION
published in accordance with Art. 158(3) EPC

(43) Date of publication:
03.12.2003 Bulletin 2003/49

(51) Int Cl.7: **B29C 49/78**, B29B 11/08,
B29C 49/06

(21) Application number: 02711320.8

(22) Date of filing: 06.02.2002

(86) International application number:
PCT/JP02/00948

(87) International publication number:
WO 02/062558 (15.08.2002 Gazette 2002/33)

(84) Designated Contracting States:
DE FR IT NL

(30) Priority: 06.02.2001 JP 2001030029

(71) Applicant: Kao Corporation
Tokyo 103-0025 (JP)

(72) Inventors:
• NARUSHIMA, Takeshi,
Kao Corporation Research Lab.
Hagagun, Tochigi 321-3497 (JP)
• TAMIYA, Yuko,
Kao Corporation Research Laboratory
Hagagun, Tochigi321-3 497 (JP)

• NISHIMINE, Naohide,
Kao Corporation Research Lab.
Hagagun, Tochigi 321-3497 (JP)
• SHIOMI, Hiroyuki,
Kao Corporation Research Lab.
Hagagun, Tochigi 321-3497 (JP)

(74) Representative:
Schuster, Thomas, Dipl.-Phys. et al
Grünecker, Kinkeldey, Stockmair &
Schwanhäusser
Anwaltssozietät
Maximilianstrasse 58
80538 München (DE)

(54) **METHOD AND DEVICE FOR DESIGN OF PREFORM**

(57) On the basis of the controllability of wall thickness distribution of a mold product by a preform shape, the number of fabrication steps and the cost required for a design and trial formation of a preform forming metal mold are reduced by designing a preform shape such that a thickness distribution of the preform leads a wall thickness distribution of an aimed mold product to thereby obtain a mold product having an ideal rigidity and stability thereof.

Fig. 2

EP 1 366 887 A1

## Description

## Technical Field

The present invention relates to a designing of a plastic mold product, particularly to a plastic molding method by using an injection blow molding in which a preform is put in a blow metal mold and blowing gas into the metal mold to expand the preform. The present invention is applicable to a designing of a metal mold for a plastic molding.

## Background Art

Blow molding of a plastic mold product using a metal mold is roughly classified to:

1) extrusion blow molding; and
2) injection blow molding.

The injection blow molding can be further classified to:

2a) non-stretch injection blow molding; and
2b) stretch blow molding.

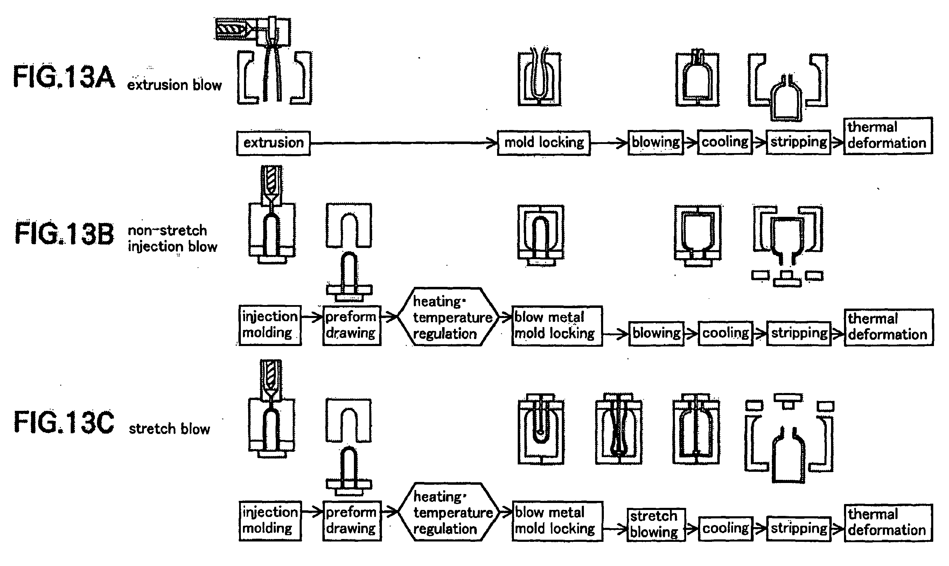

FIG. 13A to FIG. 13C show procedures in the respective blow molding methods. FIG. 13A shows the procedures of the extrusion blow molding method, FIG. 13B shows the procedures of the non-stretch blow molding method and FIG. 13C shows the procedures of the stretch blow molding method.

The extrusion blow molding fabricates a product having an outer shape corresponding to an inner shape of, for example, a metal mold by extruding molten plastic material into an interior of the metal mold, locking the metal mold and blowing gas into the molten plastic material to urge the latter onto an inner wall of the metal mold. On the other hand, the injection blow molding uses a preliminarily prepared preform. The preform is heated or temperature-regulated on demand, confined in a blow metal mold and expanded by gas blow. The non-stretch blow molding differs from the stretch blow molding in that the non-stretch blow molding to the preform is performed by using only air while the stretch blow molding to the preform is performed by stretching the preform in a longitudinal direction by means of a stretch rod and then stretching it in a lateral direction by blow air. The stretch blow molding is sometimes called as "biaxial stretch blow molding".

Japanese Patent Nos. 2955509 and 2957503 (both assigned to the assignee of this application) disclose methods for designing a metal mold in the blow molding by predicting a thermal deformation of a product after a metal mold is stripped from the product. By utilizing this method, it is possible to design a metal mold capable of obtaining a mold product having an aimed shape even if a cooling time thereof in the metal mold is shortened and the producibility is improved by realizing a reduction of molding time by the metal mold. Further, JP2001-322160A discloses a method for reasonably designing a die and a core for extruding a parison by simulating a shape of the parison in an extrusion blow molding.

In the injection blow molding, a preform is formed by injection molding. Therefore, the injection blow molding is advantageous in that it is possible to design a parison shape including wall thickness thereof precisely compared with a parison formed by the extrusion blow molding. On the other hand, wall thickness of a mold product passed through a blow molding in a later step is generally unpredictable. If a difference of the wall thickness of the mold product from a designed value is large, rigidity of the mold product is lowered. Such difference of wall thickness of the mold product may cause a considerable deformation of the mold product particularly when a metal mod is stripped from the mold product at high temperature after the blow molding, resulting in a problem of degradation of the stability of the mold product. In order to obtain an ideal wall thickness distribution for obtaining required rigidity and stability of a mold product, it is usually necessary to change a shape of a preform in a trial and error manner. Therefore, there is a problem that a designing and trial forming of preform (designing and trial forming of a metal mold for preform molding) in the injection blow molding is time consuming. Further, temperature regulation of preform before blow molding is important. That is, since properties of resin such as viscosity of molten plastics are considerably changed by temperature, the temperature regulation causes the designing and trial forming of preform to be time consuming.

The above problems become more conspicuous in the stretch blow molding in which a stretching is performed when the blow molding is performed.

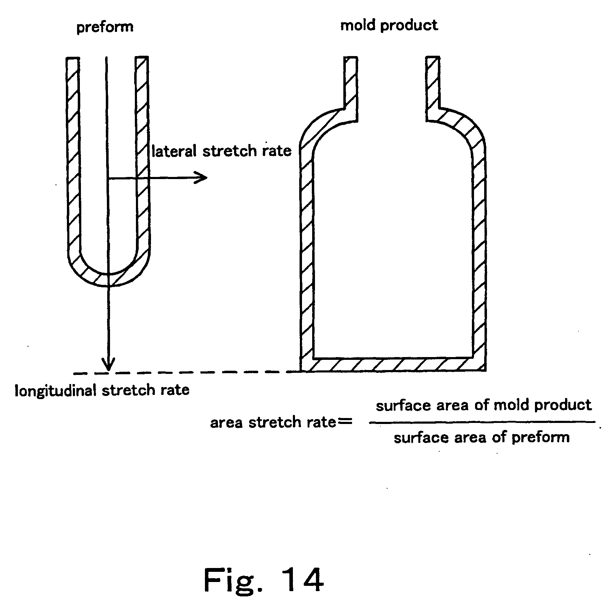

A conventional method for designing a preform will be described with reference to FIG. 14. In the injection blow molding, lateral stretch rate, longitudinal stretch rate and area stretch rate = (surface area of mold product) / (surface area of preform) strongly influence the moldability. Since a mouth portion of a preform usually becomes a mouth portion of an aimed mold product (bottle) as it is, a diameter of the preform is determined by a diameter of the mouth portion of the aimed mold product. A standard of longitudinal stretch rate is 1 ~ 1.2 times in the case of non-stretch blow molding and 1.5 ~ 3 times in the case of stretch blow molding, although it depends upon resin used. A standard of wall thickness of a preform is about 3 mm (2 ~ 4 mm). When the wall thickness is small, the molding of the preform becomes difficult. On the other hand, when the wall thickness is large, the whole molding cycle becomes long and the blowing step becomes difficult. The wall thickness of the preform is determined by the longitudinal stretch rate and the aimed wall thickness after molded.

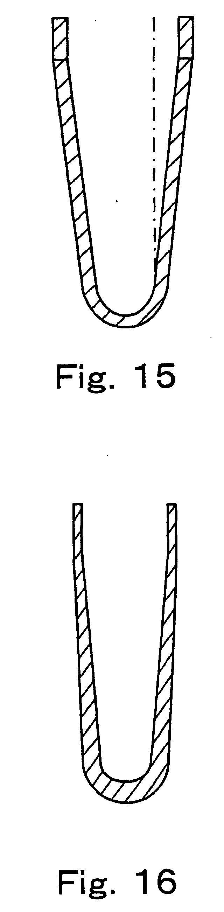

An inner diameter of the preform is determined on the basis of an inner diameter of the mouth portion of the preform. However, a certain draft angle for stripping an inner metal mold from the preform is practically necessary. Therefore, a practical preform has such shape as shown in FIG. 15. The wall thickness may be finely regulated as shown in FIG. 16 on the basis of resin material to be used and rigidity specification of the aimed mold product. Since an outer shape thereof is changed by changing the wall thickness distribution, the design of wall thickness distribution and the design of shape have the same meaning. Conventionally, however, the design of wall thickness distribution of a preform is performed empirically and appropriateness of wall thickness distribution of a mold product can be known after the product is practically molded.

A technique for determining a range of a height or a range of an average diameter of a preform is proposed in JPH7-108595A, in which the range of a height h and the range of an average outer diameter d of the preform is determined by using the finite-element method as the preform design method, performing a simulation with using the height h and the average outer diameter of a preform as design variables, sampling maximum and minimum wall thickness values of a mold product obtained as a result of simulation and determining whether or not the maximum and minimum thickness values are within a tolerable range. In this technique, however, the height h and the average diameter d are merely changed. Therefore, when the mold product is, for example, a bottle, it is impossible to increase wall thickness of a substantially stretched portion of the bolt such as a shoulder portion thereof, so that an optimal shape of the preform can not be obtained. Further, since optimization of the height h and optimization of the average diameter d are performed independently, it is not always possible to obtain an optimal solution.

**Disclosure of Invention**

The present invention is intended to solve such problems in the injection blow molding and an object of the present invention is to provide a preform designing method and a trial fabrication apparatus therefor with which time, forming step number and cost required for the designing and trial formation of an ideal shape of a preform can be reduced. Another object of the present invention is to provide a preform designing method and a trial forming apparatus therefor with which time, forming step number and cost required for the designing and trial formation of a metal mold for an optimal preform can be reduced. Particularly, an object of the present invention is to provide a designing method and an apparatus with which an optimal preform shape can be obtained.

In the injection blow molding, a preform is molded by a preform molding metal mold. The preform thus molded is put in a blow molding metal mold and molded to a mold product by blow molding. The present invention is used in designing the preform molding metal mold.

The preform designing method according to the present invention is featured by comprising the steps of calculating a wall thickness distribution of a blow mold product by performing a blow simulation for a shape of a preform including wall thickness distribution thereof, comparing the wall thickness distribution of the product calculated from the simulation with a wall thickness distribution of an aimed mold product, changing the shape of the preform on the basis of a difference therebetween and repeating the calculating step, the comparing step and the changing step until the difference becomes within a threshold value range.

Since, in the present invention, the simulation is performed by repeatedly changing the wall thickness distribution of the preform until the difference between the aimed wall thickness of a mold product and the calculated wall thickness distribution of the mold product becomes equal to or smaller than the threshold value, it is possible to obtain an optimal shape of the preform. Further, since the calculated wall thickness of the product is compared with the aimed wall thickness of the product at every node, it is possible to obtain an optimal shape of the preform.

That is, according to a first aspect of the present invention, the preform designing method is featured by comprising a first step of calculating wall thickness of a mold product on the basis of an initial shape of a preform, a second step of obtaining a difference between the calculated wall thickness distribution of the mold product and an aimed wall thickness distribution, a third step of comparing the difference with a threshold value, a fourth step of changing the initial shape of the preform on the basis of the difference when the difference exceeds the threshold value and a fifth step of repeating the first to fourth steps until the difference becomes smaller than the threshold value.

Incidentally, it is possible to preliminarily set an aimed wall thickness distribution of a mold product, to execute a blow simulation by inputting a wall thickness distribution at discrete nodes of a preform such that a total weight of the preform coincides with a total weight of the aimed mold product, to compare the wall thickness obtained at every node of the calculated mold product with the aimed wall thickness at positions corresponding to the nodes, to change the wall thickness distribution of the preform on the basis of the difference obtained by the comparison and to repeat the above procedures until the difference at every node becomes smaller than a threshold value. The preliminary setting of the aimed wall thickness distribution of the mold product may be performed by setting discrete points in the aimed mold product and assigning wall thickness to the discrete points. In general, the discrete points of the aimed mold product do not coincide with the nodes of the calculated mold product, which are obtained by the simulation. The nodes of the preform are obtained from discretization of an inner shape of the preform and the outer shape of the preform is determined by giving wall thickness outside of the nodes.

Further, it is preferable to calculate the wall thickness distribution of the mold product by using a temperature distribution of the preform.

According to a second aspect of the present invention, a preform designing apparatus is provided, which is featured by comprising means for storing an input initial shape of a preform as a three dimensional information, first means for calculating a wall thickness distribution of a mold product from the initial shape of the preform, second means for calculating a difference between the calculated wall thickness distribution of the mold product and a wall thickness distribution of an aimed mold product, third means for comparing the difference with a threshold value, fourth means for changing the wall thickness distribution of the preform on the basis of the difference when the difference exceeds the threshold value and fifth means for repeatedly executing the first to fourth means until the difference becomes smaller than the threshold value.

Incidentally, the storing means preliminarily stores an information of an aimed wall thickness distribution of the mold product, the first means includes means for performing a blow simulation in response to wall thickness distribution at discrete nodes of the preform such that a total weight of the preform coincides with that of the aimed mold product and the second means may include means for comparing wall thickness at the node of the thus calculated mold product with the aimed wall thickness at a position corresponding to the node.

According to a third aspect of the present invention, a program capable of executing the above mentioned respective means by a computer system having a basic software and the program installed therein is provided.

**Brief Description of Drawings**

FIG. 1 is a block diagram of a main portion of a design apparatus for designing a preform for use in a product molding according to an embodiment of the present invention;
FIG. 2 illustrates a designing method for designing a shape of a preform, according to the present invention;
FIG. 3 is a flowchart showing a preform shape designing procedure of the present invention;
FIG. 4 is a flowchart showing a temperature regulating condition setting procedure of the present invention;
FIG. 5 is a flowchart showing a blow metal mold designing procedure;
FIG. 6 is a cross sectional shape of a preform;
FIG. 7 shows an inside shape of a preform;
FIG. 8 shows an inside shape of a mold product;
FIG. 9 shows a wall thickness designing procedure with respect to a node i;
FIG. 10 shows a preform heating model;
FIG. 11 shows an outer diameter of a preform and a distance of an aimed position from a center axis;
FIG. 12 illustrates a concept of intensity of radiation;
FIG. 13A, FIG. 13B and FIG. 13C illustrate an extrusion blow method, an non-stretch injection blow method and a stretch blow method, respectively;
FIG. 14 illustrates a stretching rate;
FIG. 15 shows a cross sectional shape of a preform having a draft angle; and
FIG. 16 shows a cross sectional shape of a preform having regulated wall thickness.

**Best Mode for Carrying Out the Invention**

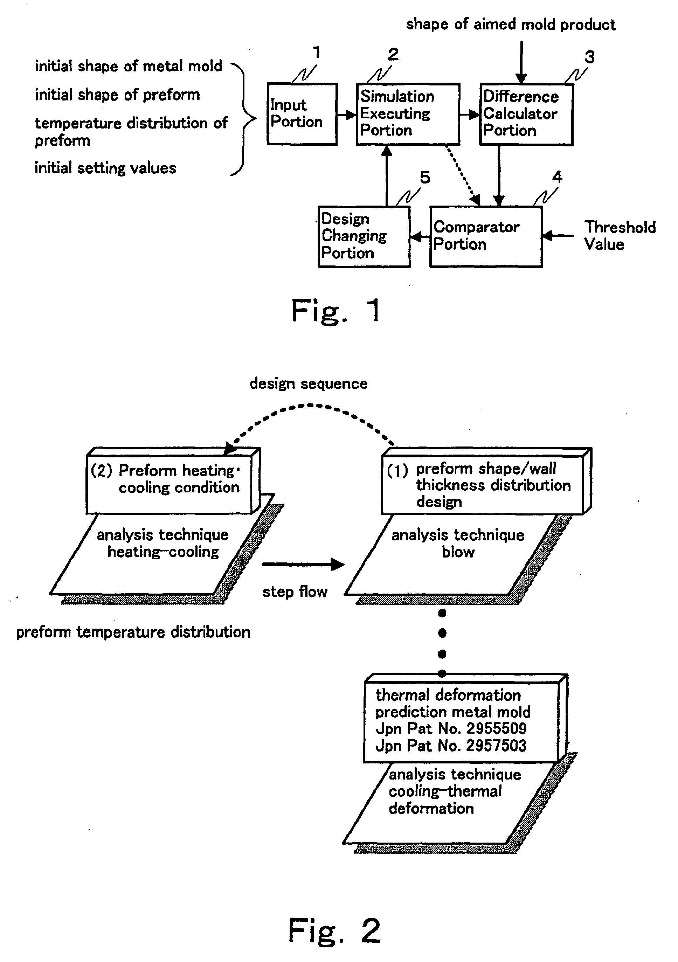

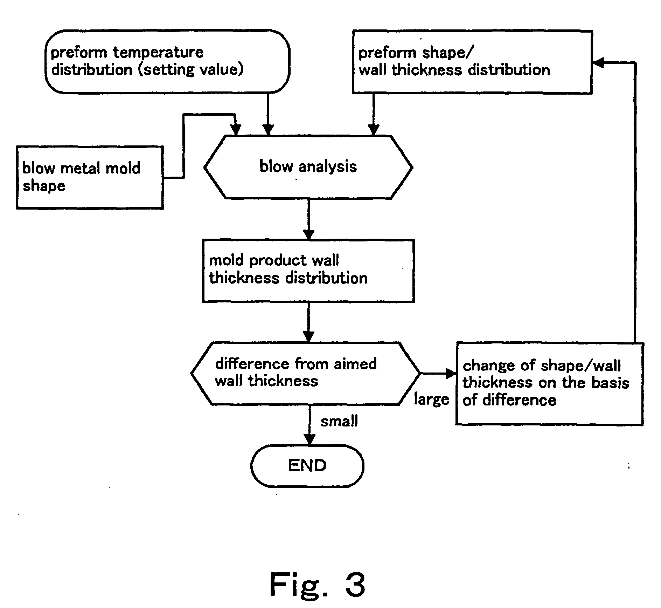

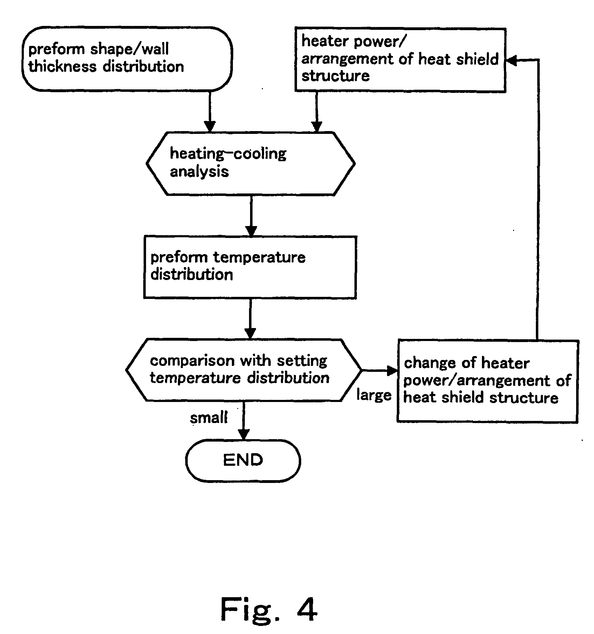

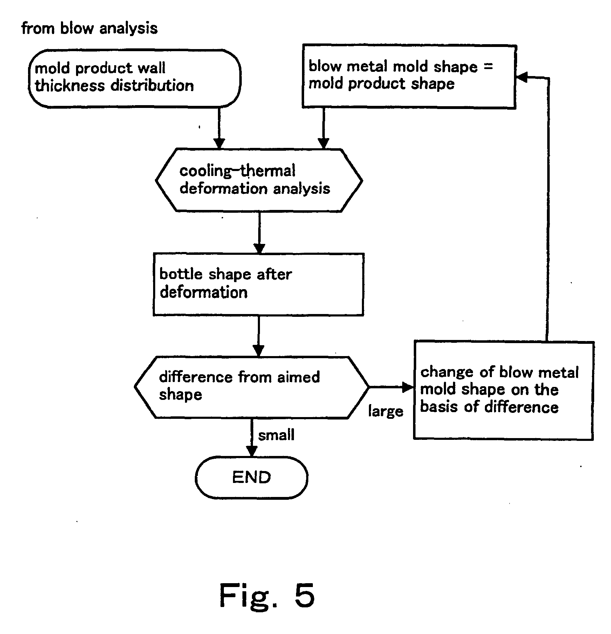

A designing apparatus of a preform according to an embodiment of the present invention will be described with reference to FIG. 1 to FIG. 5, in which FIG. 1 is a block diagram of the preform designing apparatus, FIG. 2 shows a preform design procedure, FIG. 3 is a flowchart showing a designing procedure of a shape of a preform, FIG. 4 is a flowchart showing a condition setting procedure in a temperature regulation step and FIG. 5 is a flowchart showing a blow metal mold designing procedure.

As shown in FIG. 1, the preform designing apparatus according to this embodiment comprises an input portion 1 for inputting an initial shape of a preform including wall thickness distribution as a three dimensional information, a simulation execution portion 2 for calculating a deformation simulation (blow simulation) for a deformation of the preform when the latter is put in a metal mold and blown by gas, a difference calculation portion 3 for calculating a difference in wall thickness distribution between a mold product resulting from the deformation simulation and an aimed mold product, a comparison portion 4 for comparing the difference with a threshold value and a design changing portion 5 for changing the wall thickness distribution of the preform on the basis of the difference when the difference exceeds the threshold value, and is featured by repeatedly executing the simulation execution portion 2, the difference calculation portion 3, the comparison portion 4 and the design changing portion 5 until the difference becomes smaller than the threshold value.

The preform designing apparatus of this embodiment utilizes a computer device and is realized by installing a program corresponding to an operation of the preform designing apparatus in the computer device in which a basic software (operating system (OS)) is installed. The program may be recorded on a recording medium and installed by using the recording medium. Alternatively, the program may be installed through a communication line.

Now, an operation of the preform designing apparatus of this embodiment will be described along with an injection blow molding method. In the preform designing method of the present invention, the operation starts from a preform shape having a wall thickness distribution and is featured by that the number of steps for designing the preform metal mold shape is made irreducibly minimum and an optimal preform shape is obtained by comparing a wall thickness distribution of a calculated mold product with a wall thickness distribution of an aimed mold product, changing the preform shape (wall thickness distribution) on the basis of a difference therebetween and repeating these operations to converge the difference.

As shown in FIG. 2 showing the design procedure, a preform shape (wall thickness distribution) design is performed by blow analysis after a temperature distribution of a preform is given and a preform heating condition and a preform cooling condition under which a temperature distribution similar to the set temperature distribution of the preform is obtained are obtained by a heating-cooling analysis. The blow analysis of the preform is performed again with the preform temperature distribution obtained by the heating condition and the cooling condition thus set. When a change of the metal mold for molding the preform becomes necessary, a change of the metal mold for preform is performed. Incidentally, it may be possible to obtain the preform temperature distribution by experiments without performing the heating-cooling analysis. In the blow analysis, it is necessary to give material properties by taking the preform temperature distribution into consideration. It is preferable that the analysis is performed by using a temperature dependency of the material properties of the preform and considering a temperature change with time.

That is, as shown in FIG. 1, the three dimensional information of the initial shape (wall thickness distribution) of the preform and an initial setting value of the preform temperature distribution are supplied to the input portion 1 and stored therein. The three dimensional information and the initial setting value are taken in the simulation execution portion 2 from the input portion 1. In the simulation execution portion 1, the blow analysis shown in FIG. 3 is performed by using these parameters. A result of the analysis is inputted to the difference calculation portion 3 in which the aimed shape of the mold product and the wall thickness distribution thereof are calculated. The difference is compared with the threshold value in the comparison portion 4 and, when the difference is larger than the threshold value, the preform shape (wall thickness distribution) is changed on the basis of the difference in the design change portion 5.

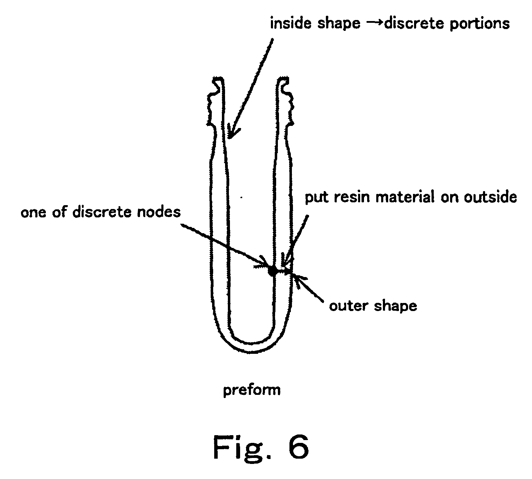

Now, how to determine the shape of the preform will be described with reference to FIG. 6, which shows a cross sectional shape of the preform. First, an inside shape of the preform is determined by the inner diameter of a mouth portion of an aimed mold product and the draft angle at discrete nodes. An outer shape of the preform is obtained by thickening the respective nodes. The blow simulation is performed for this preform shape. Incidentally, the inner diameter of the preform is the same as that of the mouth portion of the aimed mold product (bottle). Although the longitudinal stretch rate depends upon the resin material used, standards are 1 ~ 1.2 times in the case of non-stretch (height of the preform is about 0.8 ~ 1 times that of the aimed mold product) and 1.5 ~ 3 times in the case of stretch blow (height of the preform is about 0.3 ~ 0.7 times that of the aimed mold product). The thickness of the preform may be about 3 mm as in the conventional case. However, in the present invention, when the shape and rigidity specification of the aimed mold product is substantially the same as that of a mold product, the preform of which was designed previously, it is possible to set the initial shape of the preform by referring to the stored design data (inner diameter, shape and thickness of the preform) and start the designing (calculation). To give a wall thickness distribution is to give the shape of the preform.

The temperature distribution is changed depending upon the heating condition. As shown in FIG. 4, the temperature distribution of the preform is determined by inputting the shape (wall thickness distribution), heater power and an arrangement of heat shielding construction to the simulation execution portion 2 through the input portion 1. The term "heat shielding construction" represents means, which is provided between a heater and the preform for shielding thermal radiation from the heater and utilized to regulate the temperature distribution. In this embodiment, the heat shielding means is a plurality of aluminum rods disclosed in JPH11-207806A. In the simulation execution portion 2, the heating - cooling analysis is performed to calculate the temperature distribution of the preform. The temperature distribution of the preform is inputted to the comparison portion 4 (dotted line in FIG. 1) and compared with the set temperature distribution. The heater power and the arrangement of the heat shielding means are changed according to a result of the comparison.

The change of the shape of the preform (wall thickness distribution) and the setting of the heating condition are performed in this manner. In the present invention, when these changes are not enough, the shape of the blow metal mold is changed along the flowchart shown in FIG. 2 according to the methods disclosed in Japanese Patent Nos. 2955509 and 2957503. That is, as shown in FIG. 5, when the wall thickness distribution of the mold product is calculated from the shape of the preform by the blow analysis, the simulation execution portion 2 performs the cooling analysis and the thermal deformation analysis on the basis of the calculated wall thickness distribution to calculate the shape of the mold product after the blow metal mold is stripped from the mold product to thereby obtain a difference from the aimed shape. In the design changing portion 5, the shape of the blow metal mold is changed on the basis of the difference.

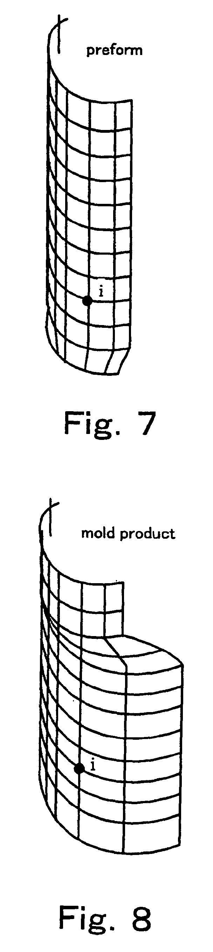

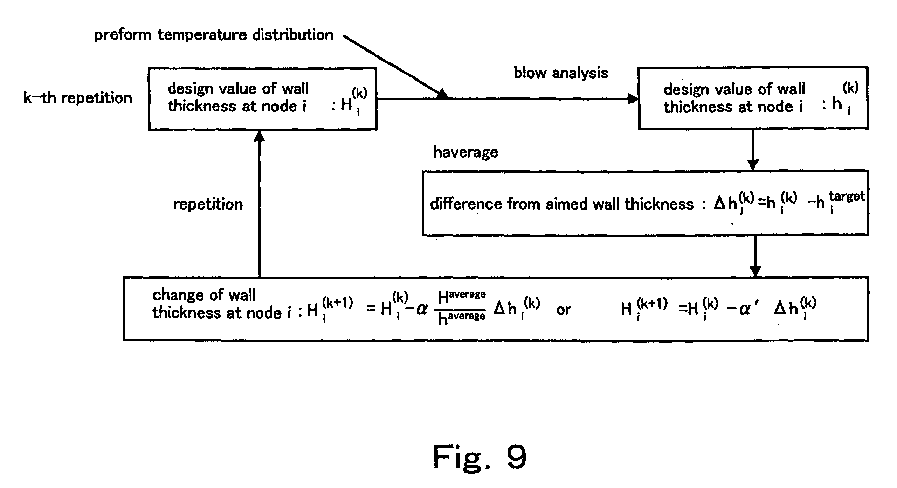

A concrete example of the wall thickness distribution designing of the preform will be described with reference to FIG. 7, which shows an inside shape of a preform, and FIG. 8, which shows an inner shape of the mold product. Describing the wall thickness design procedure with reference to a node i, the blow analysis is performed at k-th calculation according to a wall thickness design value $Hi(k)$ of the preform at the node i to obtain a mold product wall thickness $hi(k)$ at the node i and a difference $\Delta hi(k)$ between thickness $hi(k)$ and an aimed wall thickness $hi^{target}$ is obtained by $\Delta hi(k) = hi(k) - hi^{target}$, as shown in FIG. 9. Thus, in (k+1)th calculation, the wall thickness of the preform at the node i is updated as

$$Hi(k+1) = Hi(k) - \alpha' \Delta hi(k)$$

where $\alpha' = \alpha$(Haverage/haverage) where $\alpha$ is converging acceleration coefficient, Haverage is an average wall thickness of the preform and haverage is an average wall thickness of the mold product. Further, the wall thickness $Hi(k+1)$ is corrected such that the total weight of the preform coincides with the total weight of the aimed mold product. The calculation is repeated until the difference $\Delta hi(k)$ becomes equal to or smaller than the threshold value. The threshold value is usually used for all nodes commonly. However, in order to perform precise design for the mechanical strength such as bucking strength of a portion of the mold product to which higher stress is concentrated than other portions, different threshold values may be used for the respective nodes.

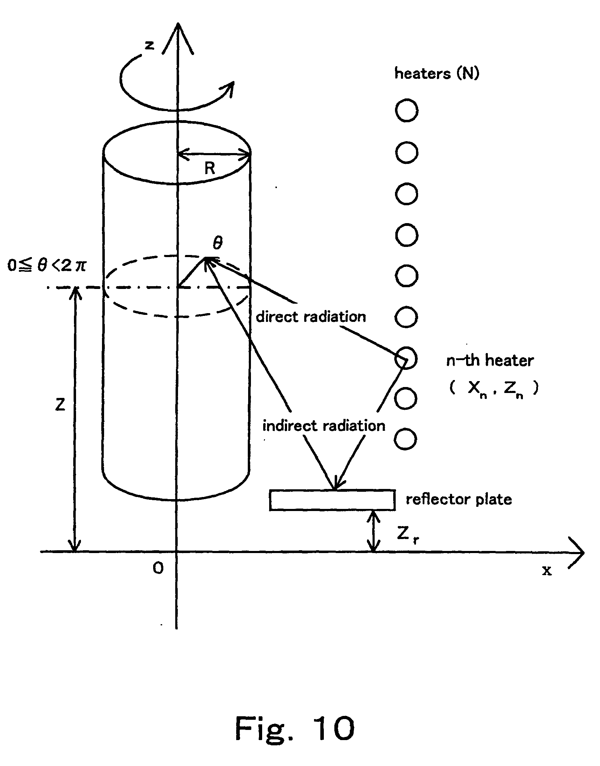

Now, an example of the preform thermal analysis will be described. As shown in FIG.10, a preform heating model is set. In the example shown in FIG. 10, the preform is a circular cylinder, the heater is represented by a line having infinite length and a reflection plate is provided on a floor. Thermal radiation received by a unit surface area of the preform in a unit time is calculated by using this model.

Radiation heat E0 received by a unit surface area of a preform in a unit time is a sum of direct radiation heat $E^{dir}$ received from a heater directly and indirect radiation heat $E^{ref}$ received from a reflection plate in a unit area and in a unit time and $E^{dir}$ and $E^{ref}$ are represented by the following equations, respectively:

$$E^{dir}(\theta, z) = \frac{\cos\theta}{2\pi} \sum_{n=1}^{N} \frac{X_n - x}{R_n^2} I_n$$

where

$$R_n \equiv \sqrt{(X_n - x)^2 + (Z_n - z)^2} \, , \, x \equiv R \cos\theta$$

$$E^{ref}(\theta, z) = \frac{I_{cor} \cos\theta}{2\pi} \sum_{n=1}^{N} \frac{X_n - X_r}{\sqrt{(X_n - X_r)^2 + (Z_n - Z_r)^2}} \frac{I_n}{R_n^{ref}}$$

where

$$X_r \equiv \frac{x(Z_n - Z_r) + X_n(z - Z_r)}{(z - Z_r) + (Z_n - Z_r)} \, , \, R_n^{ref} \equiv \sqrt{(X_n - x)^2 + (Z_n + z - 2Z_r)^2}$$

and $I_{cor}$ is reflectivity of radiation light with respect to a reflection plate.

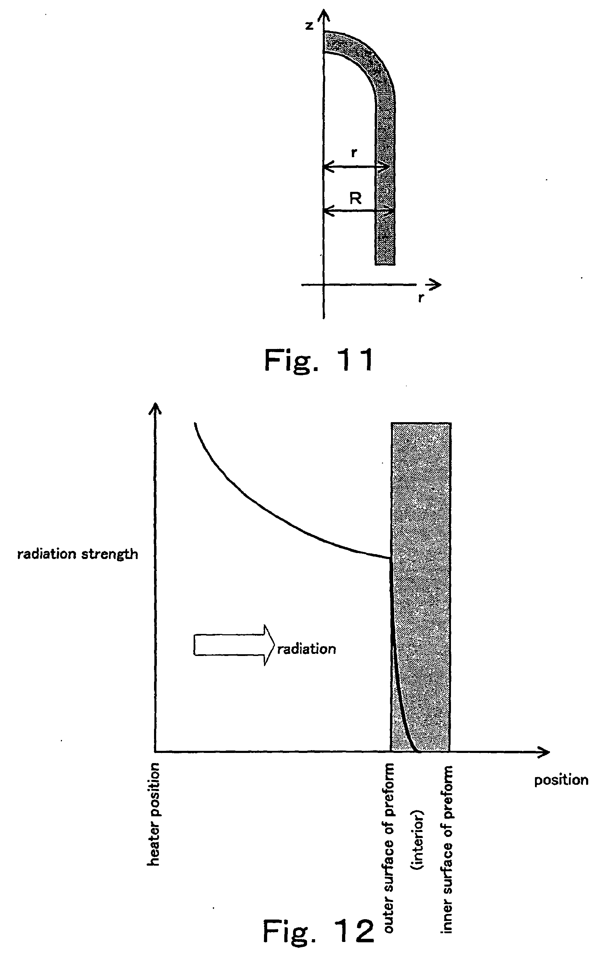

Assuming a preform model shown in FIG. 11 as heat absorption and heat diffusion of the preform, it is enough to solve the following equation under boundary conditions, where R is an outer radius of the preform and r is a distance from a center axis of an aimed position:

(Thermal Conductivity Equation)

$$k\nabla^2 T + \dot{q} = \rho C \frac{\partial T}{\partial t}$$

where T is temperature, t is time, $\rho$ is density, k is thermal conductivity and C is specific heat.
(Heat Absorption $\leftarrow$ (from radiation heat received by the surface of the preform))

$$\dot{q} = \left|\frac{\partial E}{\partial r}\right|, \quad E = E_0 e^{-\alpha(R-r)}$$

That is, the temperature distribution of the respective portions (including thickness direction) of the preform is obtained by solving the thermal conductivity equation in consideration of absorption of heat from the heater. The absorption of heat from the heater is calculated from radiation heat received by the preform surface. In doing so, the indirect radiation due to reflection is considered in addition to the direct radiation from the heater. As shown in FIG. 12, since heat of the outer surface of the preform is transmitted to an inner surface of the preform, intensity of heat transmitted into the preform is obtained by the radiation heat received by the outer surface of the preform, from which heat absorption within the preform is derived.

By using the preform heating and the heat absorption and heat diffusion of the preform, it is possible to easily perform the thermal analysis.

**Industrial Applicability**

As described hereinbefore, according to the present invention, it is possible to perform the design of a shape of a preform and the trial forming of the preform in the fabrication step in the injection blow molding of a product with high precision to thereby reduce the number of fabrication steps, time and cost required for the design and trial fabrication of a preform metal mold. Since, according to the present invention, an optimal preform shape in the injection blow molding can be designed, it is possible to provide a designing device capable of reducing a load on a designer thereof.

**Claims**

1. A preform design method comprising a first step of calculating a wall thickness distribution of a mold product on the basis of an initial shape of a preform, a second step of obtaining a difference between the calculated wall thickness distribution of the mold product and an aimed wall thickness distribution, a third step of comparing the difference and a threshold value, a fourth step of changing the initial shape of the preform on the basis of the difference when the difference exceeds the threshold value and a fifth step of repeating the first to fourth steps until the difference becomes smaller than the threshold value.

2. The preform design method as claimed in claim 1, comprising the steps of preliminarily setting the aimed wall thickness distribution of the mold product, executing a blow simulation by inputting wall thickness distribution given at discrete nodes of the preform such that total weights of the preform and the aimed mold product become coincident, comparing the wall thickness at the nodes of the mold product with the aimed wall thickness at positions corresponding to the nodes, changing the wall thickness distribution of the preform on the basis of the difference obtained by the comparison and repeating the preceding steps until the difference of each of the nodes becomes smaller than the threshold value.

3. The preform design method as claimed in claim 1 or 2, wherein the first step includes a step of calculating the wall thickness distribution of the mold product by using a temperature distribution of the preform.

4. A preform design device comprising means for storing an inputted initial shape of a preform as a three dimensional information, first means for calculating a wall thickness distribution of a mold product on the basis of the initial shape of the preform, second means for calculating a difference between the calculated wall thickness distribution of the mold product and the wall thickness distribution of the aimed mold product, third means for comparing the difference and a threshold value, fourth means for changing the wall thickness distribution of the preform on the basis of the difference when the difference exceeds the threshold value and fifth means for repeatedly executing said first to fourth means until the difference becomes smaller than the threshold value.

5. The preform design device as claimed in claim 4, wherein said storing means preliminarily stores an information of aimed wall thickness distribution of the mold product, said first means includes means for performing a blow simulation by inputting a wall thickness distribution of discrete nodes of the preform such that a total weight of the preform becomes coincident with that of the aimed mold product and said second means includes means for comparing wall thickness of the mold product thus obtained at the nodes with the aimed wall thickness at positions corresponding to the nodes.

6. A program for controlling a computer device to execute the respective means as claimed in claim 4 or 5.

EP 1 366 887 A1

shape of aimed mold product

initial shape of metal mold

initial shape of preform

temperature distribution of preform

initial setting values

**1** Input Portion

**2** Simulation Executing Portion

**3** Difference Calculator Portion

**5** Design Changing Portion

**4** Comparator Portion

Threshold Value

## Fig. 1

design sequence

(2) Preform heating· cooling condition

analysis technique heating—cooling

preform temperature distribution

step flow

(1) preform shape/wall thickness distribution design

analysis technique blow

thermal deformation prediction metal mold
Jpn Pat No. 2955509
Jpn Pat No. 2957503

analysis technique cooling—thermal deformation

## Fig. 2

9

preform temperature distribution (setting value)

preform shape/ wall thickness distribution

blow metal mold shape

blow analysis

mold product wall thickness distribution

difference from aimed wall thickness

large

change of shape/wall thickness on the basis of difference

small

END

Fig. 3

Fig. 4

from blow analysis

```
┌─────────────────────┐          ┌─────────────────────────┐
│ mold product wall   │          │ blow metal mold shape = │◀──┐
│ thickness distribution│         │ mold product shape      │   │
└─────────┬───────────┘          └───────────┬─────────────┘   │
          │                                  │                 │
          └──────────┐      ┌────────────────┘                 │
                     ▼      ▼                                   │
              ┌──────────────────────┐                         │
              │ cooling–thermal      │                         │
              │ deformation analysis │                         │
              └──────────┬───────────┘                         │
                         │                                     │
                         ▼                                     │
              ┌──────────────────────┐                         │
              │ bottle shape after   │                         │
              │ deformation          │                         │
              └──────────┬───────────┘                         │
                         │                                     │
                         ▼                          ┌──────────┴──────────┐
              ┌──────────────────────┐     large    │ change of blow metal│
              │ difference from aimed ├─────────────▶│ mold shape on the   │
              │ shape                │               │ basis of difference │
              └──────────┬───────────┘               └─────────────────────┘
                         │ small
                         ▼
                    ┌─────────┐
                    │  END    │
                    └─────────┘
```

# Fig. 5

inside shape →discrete portions

put resin material on outside

one of discrete nodes

outer shape

preform

# Fig. 6

preform

i

Fig. 7

mold product

i

Fig. 8

preform temperature distribution

k–th repetition

design value of wall thickness at node i : $H_i^{(k)}$

blow analysis

design value of wall thickness at node i : $h_i^{(k)}$

haverage

difference from aimed wall thickness : $\Delta h_i^{(k)} = h_i^{(k)} - h_i^{\text{target}}$

repetition

change of wall thickness at node i : $H_i^{(k+1)} = H_i^{(k)} - \alpha \dfrac{H_{\text{average}}}{h^{\text{average}}} \Delta h_i^{(k)}$  or  $H_i^{(k+1)} = H_i^{(k)} - \alpha' \Delta h_i^{(k)}$

# Fig. 9

Fig. 10

Fig. 11

radiation strength

radiation

heater position

outer surface of preform (interior)

inner surface of preform

position

Fig. 12

17

**FIG.13A** extrusion blow

extrusion → mold locking → blowing → cooling → stripping → thermal deformation

**FIG.13B** non-stretch injection blow

injection molding → preform drawing → heating・temperature regulation → blow metal mold locking → blowing → cooling → stripping → thermal deformation

**FIG.13C** stretch blow

injection molding → preform drawing → heating・temperature regulation → blow metal mold locking → stretch blowing → cooling → stripping → thermal deformation

EP 1 366 887 A1

preform

mold product

lateral stretch rate

longitudinal stretch rate

$$\text{area stretch rate} = \frac{\text{surface area of mold product}}{\text{surface area of preform}}.$$

# Fig. 14

Fig. 15

Fig. 16

<table>
<tr><td colspan="2"><b>INTERNATIONAL SEARCH REPORT</b></td><td>International application No.<br>PCT/JP02/00948</td></tr>
</table>

**A. CLASSIFICATION OF SUBJECT MATTER**
Int.Cl⁷ B29C49/78, B29B11/08, B29C49/06

According to International Patent Classification (IPC) or to both national classification and IPC

**B. FIELDS SEARCHED**

Minimum documentation searched (classification system followed by classification symbols)
Int.Cl⁷ B29C49/78, B29B11/08, B29C49/06

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-108595 A (Denki Kagaku Kogyo Kabushiki Kaisha), 25 April, 1995 (25.04.95), Claims 1, 2; column 4, lines 9 to 10, 13, 43; column 5, lines 10 to 15 (Family: none) | 1-6 |
| X | Hideo YOSHIKAWA "Jitsuyoteki Blow Seikei· Netsuseikei Kaiseki Program" Plastics, 01 March, 2000 (01.03.00), Vol.51, No.3, page 38, line 12 to page 39, line 13 | 1-6 |
| A | JP 5-169520 A (Sekisui Chemical Co., Ltd.), 09 July, 1993 (09.07.93), Claim 1 (Family: none) | 1-6 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>07 May, 2002 (07.05.02) | Date of mailing of the international search report<br>21 May, 2002 (21.05.02) |
| Name and mailing address of the ISA/<br>Japanese Patent Office | Authorized officer |
| Facsimile No. | Telephone No. |

Form PCT/ISA/210 (second sheet) (July 1998)